# FASCICULE DE BREVET EUROPEEN

(11) **EP 0 610 104 B1**
(45) Date de publication et mention de la délivrance du brevet: **02.09.1998**
(21) Numéro de dépôt: 94400036.3
(22) Date de dépôt: 06.01.1994
(51) Int. Cl.: H04N 1/00

(54) **Procédé et dispositif de mise en pression des contre-galets d'entraînement dans un appareil tel qu'un télécopieur**
Verfahren und Vorrichtung zum Andrücken von Antriebsrollen in einem Faksimilegerät
Method and device for pressing a roller drive in a facsimile apparatus

(30) Priorité: 02.02.1993 FR 9301091
(43) Date de publication de la demande: 10.08.1994
(73) Titulaire: SOCIETE D'APPLICATIONS GENERALES D'ELECTRICITE ET DE MECANIQUE SAGEM, F-75783 Paris Cédex 16 (FR)
(72) Inventeur: Garcia, Salvador, F-95100 Argenteuil (FR); Vegeais, Patrick, F-78112 Fourqueux (FR)
(74) Mandataire: Bloch, Gérard

(56) Documents cités:
- EP-A- 0 079 821
- DE-A- 3 924 757
- US-A- 3 949 869
- US-A- 4 780 767
- US-A- 4 953 037

## Description

La présente invention concerne un procédé de fixation sur le bâti d'un appareil tel qu'un télécopieur, des organes de maintien élastiques de mise en pression des contre-galets d'entraînement des feuilles de papier, comprenant les étapes consistant à :
- appliquer lesdits organes de maintien sur lesdits moyens élastiques de manière à comprimer ces derniers ;
- amener lesdits organes de maintien en position d'emboîtement dans des moyens appropriés du bâti :

L'invention concerne aussi un dispositif de mise en pression des contre-galets d'entraînement des feuilles de papeir dans un appareil tel qu'un télécopieur, et plus particulièrement un tel dispositif comprenant des moyens élastiques comprimés entre lesdits contre-galets et un organe de maintien fixé au bâti de l'appareil.

Dans les appareils destinés à la bureautique, par exemple dans les télécopieurs, où il est nécessaire d'entraîner des feuilles de papier, le principe le plus communément adopté pour réaliser cette fonction est l'utilisation de galets en élastomère. Pour presser le papier contre ces galets, on utilise des contre-galets qui exercent une pression radiale sur les galets en élastomère grâce à des moyens élastiques tels que des ressorts à lame ou hélicoïdaux, en appui sur les axes des contre-galets.

Ces moyens élastiques prennent par ailleurs généralement appui sur un organe de maintien intennédiaire fixé au bâti de l'appareil par des moyens de fixation classique (vis, rivetage, clipsage...). Le document US-A-4780767 décrit des moyens de fixation de ce type.

De tels moyens de fixation présentent toutefois l'inconvénient de nécessiter un grand nombre de pièces et d'augmenter ainsi les temps de montage et de maintenance.

On connaît un procédé du type ci-dessus et un dispositif correspondant, notamment par le document US-A-4953037.

Toutefois, le procédé de ce document présente l'inconvénient que les moyens élastiques de mise en pression risquent de quitter leur position d'emboîtement.

La présente invention vise a pallier ces inconvénients.

A cet effet, l'invention concerne un procédé selon la revendication 1.

L'invention a également pour objet un dispositif de mise en pression des contre-galets d'entraînement des feuilles de papier dans un appareil tel qu'un télécopieur, comprenant des moyens élastiques comprimés entre ledits contre-galets et un organe de maintien fixé au bâti de l'appareil, caractérisé par le fait que ledit organe de maintien est emboîté dans des moyens appropriés du bâti et maintenu dans cette position par l'effort de compression desdits moyens élastiques.

On comprend donc que les organes de maintien et les moyens élastiques se maintiennent en fait l'un l'autre sans que soient nécessaire d'autres moyens de fixation des organes de maintien.

L'invention permet par conséquent de réduire le nombre de pièces utilisées, le coût de la fonction de fixation des organes de maintien, le temps de montage et le coût de maintenance (démontage et pièces détachées). Il permet également, du fait de la réduction du nombre de pièces, d'augmenter la fiabilité de l'appareil.

Dans un mode de réalisation particulier, l'organe de maintien est une plaque d'appui.

Cette plaque peut notamment posséder au moins un prolongement engagé dans un trou du bâti sensiblement perpendiculairement à la direction de compression desdits moyens élastiques.

Le bâti peut, par ailleurs être muni d'au moins un pion engagé dans un trou de la plaque sensiblement dans la direction de compression desdits moyens élastiques.

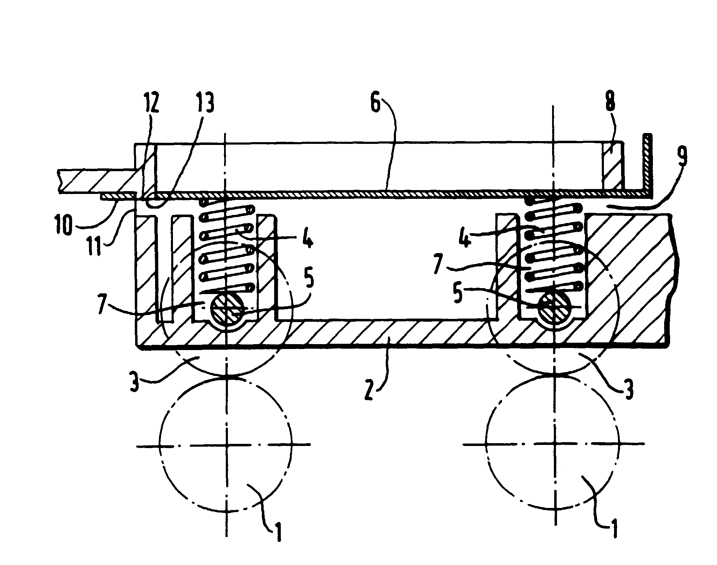

On décrira maintenant à titre d'exemple non limitatif, un mode de réalisation particulier de l'invention en référence à la figure unique annexée, représentant une vue en coupe d'un dispositif selon l'invention.

On voit sur la figure les galets d'entraînement 1 d'un télécopieur. Ces galets 1 sont portés par des paliers (non représentés) montés dans le bâti 2 de l'appareil.

Afin de presser une feuille de papier contre les galets d'entraînement 1, des contre-galets 3 d'axe parallèle aux axes des galets 1, exercent sur ces derniers une pression radiale. Cette pression est exercée à l'aide de ressorts hélicoïdaux 4 prenant appui d'une part sur les axes 5 des contre-galets et d'autre part sur une plaque de maintien 6 solidaire du bâti 2. Les ressorts 4 sont logés dans des trous borgnes 7 du bâti, dont les parois sont percées à proximité du fond pour permettre le passage des axes 5, et qui débouchent du côté de la plaque 6.

La plaque 6 est maintenue par les ressorts 4 avec sa périphérie en appui contre une nervure 8 du bâti. Dans cette position, la plaque 6 est sensiblement parallèle aux axes des galets 1 et des contre-galets 3 et perpendiculaire aux axes des trous 7 et des ressorts 4.

Pour la mise en place de la plaque 6, le bâti 2 possède une fente 9 dans laquelle la plaque 6 est introduite et amenée à coulisser. Ce coulissement s'effectue, après mise en compression des ressorts 4, par glissement sur les extrémités extérieures de ces ressorts 4.

A son extrémité introduite en premier dans la fente 9, la plaque 6 possède une patte 10 qui, en fin de mise en place de la plaque 6, pénètre dans un trou 11 du bâti. Ce trou 11 est orienté dans la direction d'introduction de la plaque 6 et donc sensiblement perpendiculairement à la direction de compression des ressorts 4.

Le bord du trou 11 opposé au ressort 4 forme un pion 12, parallèle donc à la direction de compression des ressorts 4, qui pénètre dans un trou 13 de la plaque 6 lorsque celle-ci est complètement mise en place. Dans cette position la plaque 6 est par conséquent emboîtée dans le bâti 1, et plus particulièrement dans sa nervure 8, et maintenue dans cette position d'emboîtement par la pression exercée par les ressorts 4.

Du fait de la pénétration de la patte 10 de la plaque 6 dans le trou 11 du bâti 2, et de la pénétration du pion 12 dans le trou 13 de la plaque 6, plus aucun mouvement de la plaque 6 n'est possible sans un écrasement préalable des ressorts 4. La plaque 6 est ainsi parfaitement maintenue en usage normal.

En revanche, son démontage pour une opération de maintenance quelconque est particulièrement aisée puisqu'il suffit d'appuyer sur la plaque pour comprimer les ressorts 4, puis de tirer sur la plaque de manière à la retirer par la fente 9 du bâti 2.

Aucun moyen de fixation complémentaire n'est nécessaire pour la fixation de la plaque 6 sur le bâti 2.

## Revendications

1. Procédé de fixation sur le bâti (2) d'un appareil tel qu'un télécopieur, des organes de maintien (6) des moyens élastiques (4) de mise en pression des contre-galets (3) d'entraînement des feuilles de papier, comprenant les étapes consistant à :
- appliquer lesdits organes de maintien sur lesdits moyens élastiques de manière à comprimer ces derniers ;
- amener lesdits organes de maintien en position d'emboîtement dans des moyens (8, 11, 12) appropriés du bâti ;
procédé caractérisé par le fait qu'il comprend en outre une étape consistant à provoquer et maintenir ledit emboîtement par l'effort de compression desdits moyens élastiques.

2. Dispositif de mise en pression des contre-galets (3) d'entraînement des feuilles de papier dans un appareil tel qu'un télécopieur, comprenant des moyens élastiques (4) comprimés entre lesdits contre-galets et un organe de maintien (6) fixé au bâti (2) de l'appareil et emboîté dans des moyens appropriés (8, 11, 12) du bâti, dispositif caractérisé par le fait que l'organe de maintien est maintenu dans sa position d'emboîtement par l'effort de compression desdits moyens élastiques.

3. Dispositif selon la revendication 2, dans lequel ledit organe est une plaque d'appui.

4. Dispositif selon la revendication 3, dans lequel ladite plaque possède au moins un prolongement (10).

## Patentansprüche

1. Verfahren zur Befestigung von Haltegliedern (6) federnder Elemente (4), die Andrückrollen (3) für die Papiertransportrollen mit Druck beaufschlagen, am Rahmen (2) eines Geräts, wie ein Telefaxgerät, bestehend aus folgenden Verfahrensschritten:
- Anbringen der Halteglieder auf die federnden Elemente derart, daß diese zusammengedrückt werden;
- Einbringen der Halteglieder in eine Einschachtelnstellung in geeignete Mittel (8, 11, 12) am Rahmen;
**dadurch gekennzeichnet,** daß in einem weiteren Verfahrensschritt die Einschachtelnstellung über den Federdruck der federnden Elemente erwirkt und aufrechterhalten wird.

2. Vorrichtung zur Druckbeaufschlagung der Andrückrollen (3) für die Papiertransportrollen in einem Gerät, wie einem Telefaxgerät, mit federnden Elementen (4), die zwischen den Andrückrollen und einem am Rahmen (2) befestigten Halteglied (6) eingespannt sind, das in geeignete Mittel (8, 11, 12) des Rahmens einschachtelt, **dadurch gekennzeichnet,** daß das Halteglied in seiner Einschachtelnstellung über den Federdruck der federnden Elemente gehalten ist.

3. Vorrichtung nach Anspruch 2, **dadurch gekennzeichnet,** daß das Halteglied eine Druckplatte ist.

4. Vorrichtung nach Anspruch 3, **dadurch gekennzeichnet,** daß das Halteglied mindestens eine Verlängerung (10) aufweist.

## Claims

1. Method for fixing on the frame (2) of an apparatus such as a facsimile machine, members (6) for retaining spring means (4) for pressurising counter-rollers (3) for the driving of sheets of paper, comprising the steps consisting of:
- fitting said retaining members on said spring means in order to compress the latter;
- bringing said retaining members into an interlocked position in appropriate means (8, 11, 12) of the frame;
method characterised by the fact that it also comprises a step consisting of causing and maintaining said interlocking by the compression force of said spring means.

2. Device for pressuring counter-rollers (3) for the driving of sheets of paper in an apparatus such as a facsimile machine, comprising spring means (4) compressed between said counter-rollers and a retaining member (6) fixed to the frame (2) of the apparatus and interlocked in appropriate means (8, 11, 12) of the frame, device characterised by the fact that the retaining member is held in its interlocked position by the compression force of said spring means.

3. Device according to Claim 2, in which said member is a support plate.

4. Device according to Claim 3, in which said plate has at least one extension (10).
